# EUROPÄISCHE PATENTSCHRIFT

(11) **EP 0 580 931 B1**
(45) Veröffentlichungstag und Bekanntmachung des Hinweises auf die Patenterteilung: **03.01.1996**
(21) Anmeldenummer: 92890175.0
(22) Anmeldetag: 31.07.1992
(51) Int. Cl.: F01N 3/20

(54) **Brennkraftmaschine mit einem umgehbaren Startkatalysator**
Internal combustion engine with bypassable start-up catalyst
Moteur à combustion interne avec catalyseur de démarrage pouvant être contourné

(43) Veröffentlichungstag der Anmeldung: 02.02.1994
(73) Patentinhaber: AVL Gesellschaft für Verbrennungskraftmaschinen und Messtechnik mbH.Prof.Dr.Dr.h.c. Hans List, A-8020 Graz (AT)
(72) Erfinder: Koppe, Reinhard, A-8542 St.Peter i. Sulmtal (AT); Zelenka, Paul, Dr., A-8200 Gleisdorf (AT); Rokita, Ralf, Dipl.-Ing., A-8010 Graz (AT)
(74) Vertreter: Krause, Walter, Dr. Dipl.-Ing.

(56) Entgegenhaltungen:
- EP-A- 0 329 818
- DE-A- 3 738 538
- DE-A- 3 826 364
- US-A- 3 236 044
- WO 92/19850

## Beschreibung

Die Erfindung betrifft eine Brennkraftmaschine mit einem umgehbaren Startkatalysator, mit einem Steuerorgan zum Umschalten der Strömung in einer Abgasleitung zwischen einer den Startkaltalysator aktivierenden Kaltlaufstellung und einer den Startkatalysator umgehenden Warmlaufstellung, und zumindest einem den Startkatalysator umgehenden Strömungsweg, wobei das Steuerorgan als eine außerhalb einer Gehäusewand betätigbare, ringförmige und mit der Abgasleitung achsgleiche und längs dieser verschiebbare Abgasverschiebemuffe ausgebildet ist, und die Abgasverschiebemuffe Durchtritte aufweist, die in der Warmlaufstellung den den Startkatalysator umgehenden Strömungsweg freigeben.

Obwohl ein großer Teil der Emissionen einer Brennkraftmaschine noch in der Startphase freigesetzt wird, sind die auf Betriebstemperatur ausgelegten herkömmlichen Katalysatoren bis zum Erreichen einer Ansprechtemperatur unwirksam.

Um auch in der Kaltlaufphase eine volle Katalysatorfunktion zu gewährleisten, ist beispielsweise aus der US-PS 3 791 143 bekannt, im Abgasstrom in kurzer Entfernung hinter dem Zylinderkopf, vor dem in herkömmlicher Weise auf Betriebstemperatur ausgelegten Hauptkatalysator, einen zuschaltbaren Startkatalysator anzuordnen. Während der Startphase wird das gesamte Abgas durch diesen Startkatalysator geleitet. Um jedoch im Dauerbetrieb eine Überhitzung des Startkatalysators zu vermeiden, wird durch Umlegen einer Klappe vor dem Startkatalysator die Abgasströmung in eine Umgehungsleitung umgeleitet, wobei der Startkatalysator desaktiviert ist.

Derartige verzweigte Abgasleitungen haben sich in der Praxis zwar bewährt, jedoch können bei derartigen Klappensystemen im Betrieb Probleme auftreten. So läßt sich ein Festfressen der Klappe in einer der beiden Klappenstellungen trotz aufwendigster Lagerung und Führung aufgrund der teilweise aggressiv wirkenden Abgasbestandteile nicht vermeiden.

Weiters ist es bekannt zum Umschalten zwischen den beiden Strömungswegen zum Startkatalysator und zur Umgehungsleitung den Wärmedehnungseinfluß relativ zueinander bewegbarer Teile der Abgasleitung zur selbsttätigen Betätigung eines Steuerorganes zu verwenden. Solche Steuerorgane haben aber den Nachteil eines schlechten Wirkungsgrades wegen der ungenauen und langsamen Betätigung und wegen der besonders in Zwischenstellungen des Steuerorgans nicht exakt festgelegten Anströmrichtung des Startkatalysators.

Aus der WO 92/19850 ist eine Brennkraftmaschine der eingangs genannten Art bekannt, bei der ein ringförmiger Startkatalysator verwendet wird. Der umgehende Strömungsweg führt innerhalb des Katalysators an diesem vorbei. Ringförmige Katalysatoren haben den Nachteil höherer Kosten und einer relativ großen wärmeabstrahlenden Oberfläche, was die Erwärmung des Abgassystems auf Betriebstemperatur während der Warmlaufphase verzögert. Zur Umschaltung zwischen den Strömungswegen durch den Startkatalysator und dem umgehenden Strömungsweg wird in der WO 92/19850 eine Verschiebemuffe mit blendenartigen Strömungsdurchtritten verwendet, welche Verwirbelungen und damit starke Schwankungen der Strömungsbedingungen am Eintritt in den Startkatalysator verursachen.

Aufgabe der Erfindung ist es, diese Nachteile zu vermeiden, und eine genaue und schnelle Regelung des Startkatalysators bei möglichst geringer Korrosionsanfälligkeit und homogenen Strömungsbedingungen vor dem Startkatalysator zu erreichen.

Dieses Ziel wird erfindungsgemäß dadurch erreicht, daß stromabwärts der Abgasverschiebemuffe ein mit der Abgasleitung achsgleicher Strömungsteiler angeordnet ist, und daß der Startkatalysator in Form eines Zylinders ausgebildet ist und der umgehende Strömungsweg außen am Startkatalysator vorbeiführt.

Durch die externe Betätigung wird ein rasches Umschalten zwischen den beiden Endstellungen der Abgasverschiebemuffe erreicht, wodurch Zwischenstellungen rasch durchfahren werden können. Die Strömungsrichtung ist damit immer exakt festgelegt. Die Regelung der Abgasverschiebemuffe kann dabei elektronisch temperaturabhängig und/oder über eine Unter- oder Überdruckdose kennfeldgeregelt erfolgen.

In einer vorteilhaften Ausführungsvariante ist vorgesehen, daß der den Startkatalysator umgehende Strömungsweg als Ringraum zwischen zwei achsgleichen konzentrischen Rohren gebildet wird, wobei der Startkatalysator vom Innenrohr aufgenommen wird. Dadurch kann eine sehr kompakte Bauweise mit geringer Baugröße und wenigen Bauteilen realisiert werden. Die Wärmeverluste bleiben dabei sehr gering. Durch die Anordnung des Startkatalysators im Innenrohr wird dieser durch die umgebende Mantelströmung während der Warmlaufphase ständig auf Temperatur gehalten. Während der Kaltlaufphase verhindert das umgebende Mantelrohr eine übermäßige Wärmeabstrahlung des Startkatalysators an die Umgebung, wodurch die baldige Erwärmung des Startkatalysators begünstigt wird.

Dabei ist es sehr vorteilhaft, wenn das Innenrohr als Doppelmantelrohr ausgeführt ist. Dadurch wird der Startkatalysator einerseits in der Warmlaufphase vor Überhitzung, andererseits in der Kaltlaufphase noch besser gegen Wärmeabstrahlung geschützt.

Zur Minderung der Korrosionsanfälligkeit ist es vorteilhaft, einen durch die Abgasleitung und die Gehäusewand gebildeten Ringraum vorzusehen, in welchem ein Betätigungsteil der Abgasverschiebemuffe während der Kaltlaufphase des Motors in die Kaltlaufstellung eingeschoben werden kann. Dadurch bleibt die Abgasverschiebemuffe vor den aggressiven Abgasbestandteilen während der Kaltlaufphase geschützt.

In Ausgestaltung der Erfindung ist vorgesehen, daß zur Betätigung der Abgasverschiebemuffe zumindest ein durch eine die Gehäusewand durchsetzende Welle drehbarer Exzenter vorgesehen ist, welcher an der Abgasverschiebemuffe angreift. Die Welle kann dabei elektrisch, magnetisch oder mechanisch verdreht werden.

In einer anderen Ausführungsvariante der Erfindung ist vorgesehen, daß die Abgasverschiebemuffe mit zumindest einem die Gehäusewand durchsetzenden Bolzen starr verbunden ist, durch welche(n) vorzugsweise über einen Stellring die Abgasverschiebemuffe betätigbar sind (ist), wobei im Bereich der (des) Bolzen(s) in der Gehäusewand je eine in Verschieberichtung langgestreckte Öffnung vorgesehen ist.

In einer sehr vorteilhaften weiteren Ausführungsvariante der Erfindung ist vorgesehen, daß die Abgasverschiebemuffe und der Strömungsteiler über Stege miteinander verbunden sind, und die Abgasverschiebemuffe über eine am Strömungsteiler mittig angreifende Regelstange betätigbar ist. Die Regelstange kann dabei z.B. durch eine Öffnung im Krümmer geführt werden und außerhalb der Abgasleitung betätigt werden. Dies erlaubt eine besonders kompakte Bauweise der Vorrichtung.

Eine vorteilhafte Weiterführung der Erfindung sieht vor, daß der Strömungsteiler und/oder der Startkatalysator elektrisch beheizbar ist. Damit wird in der Kaltlaufphase des Motors das auf niedrige Temperatur ausgelegte rasche Ansprechverhalten des Startkatalysators weiter beschleunigt, wodurch schon in der Startphase die Katalysatorwirkung auf das Abgas erreicht wird.

Im folgenden wird die Erfindung anhand von in den Fig. dargestellten Ausführungsbeispielen näher erläutert. Es zeigen:
Fig. 1 einen erfindungsgemäßen umgehbaren Startkatalysator,
Fig. 2 ein anderes Ausführungsbeispiel der Erfindung mit einem mantelumströmten Startkatalysator,
Fig. 3 und 4 Details verschiedener Betätigungsmechanismen und
Fig. 5 ein weiteres Ausführungsbeispiel der Erfindung.

Funktionsgleiche Teile sind mit denselben Bezugszeichen versehen.

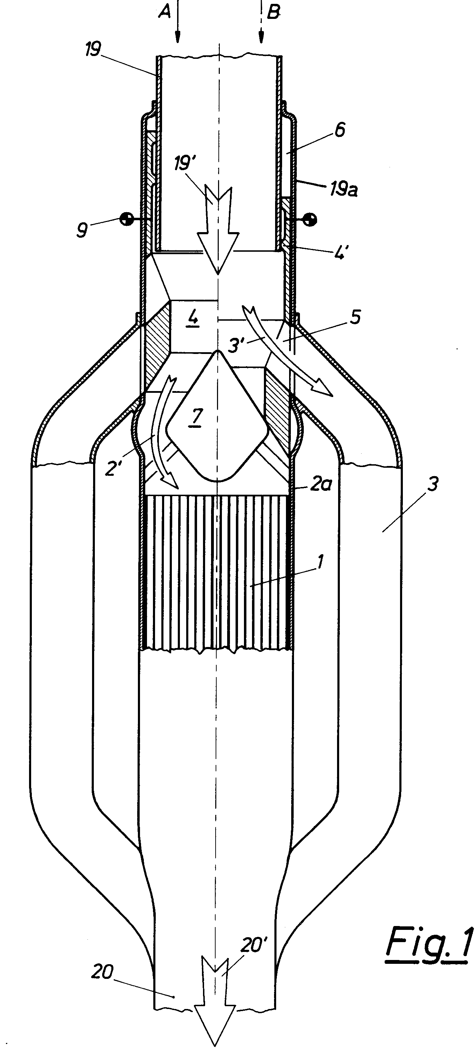

In Fig. 1 wird ein Startkatalysator 1 von einem Rohr 2a aufgenommen. In der Kaltlaufstellung A der Muffe 4 strömt das vom Motor kommende, durch den Pfeil 19' symbolisierte Abgas, über die von der Abgasmuffe 4 freigegebenen Strömungsweg 2' durch den Startkatalysator 1 und gelangt in weiterer Folge über die Abgasleitung 20 zum Hauptkatalysator (nicht dargestellt). Der Strömungsweg zum Hauptkatalysator ist durch den Pfeil 20' angedeutet. Der vor dem Startkatalysator 1 angeordnete Strömungsteiler 7 kann elektrisch beheizt werden und wärmt in der Startphase das kalte Abgas vor, wodurch das sogenannte lightoff-Verhalten des Startkatalysators 1 verbessert wird. Während der Kaltlaufphase bleibt der den Startkatalysator 1 umgehende Strömungsweg 3' (Pfeil) durch die Bypaßleitung 3 verschlossen. Ab einem definierten Temperaturniveau im Abgasstrom (lightoff-Temperatur des Hauptkatalysators) wird die Abgasverschiebemuffe 4 durch die am Betätigungsteil 4' angreifende betätigungseinrichtung 9 in die Warmlaufstellung B axial verschoben, wodurch der Abgasstrom 2' (Pfeil) zum Startkatalysator 1 unterbrochen un der Strömungsweg 3' durch die Durchtritte 5 der Abgasverschiebemuffe 4 in die Bypaßleitung 3 freigegeben wird. Mit 6 ist ein von der Abgasleitung 19 und von der Gehäusewand 19a gebildeter Ringraum dargestellt, in den der Betätigungsteil 4' der Abgasverschiebemuffe 4 in der Kaltlaufstellung A eingeschoben wird.

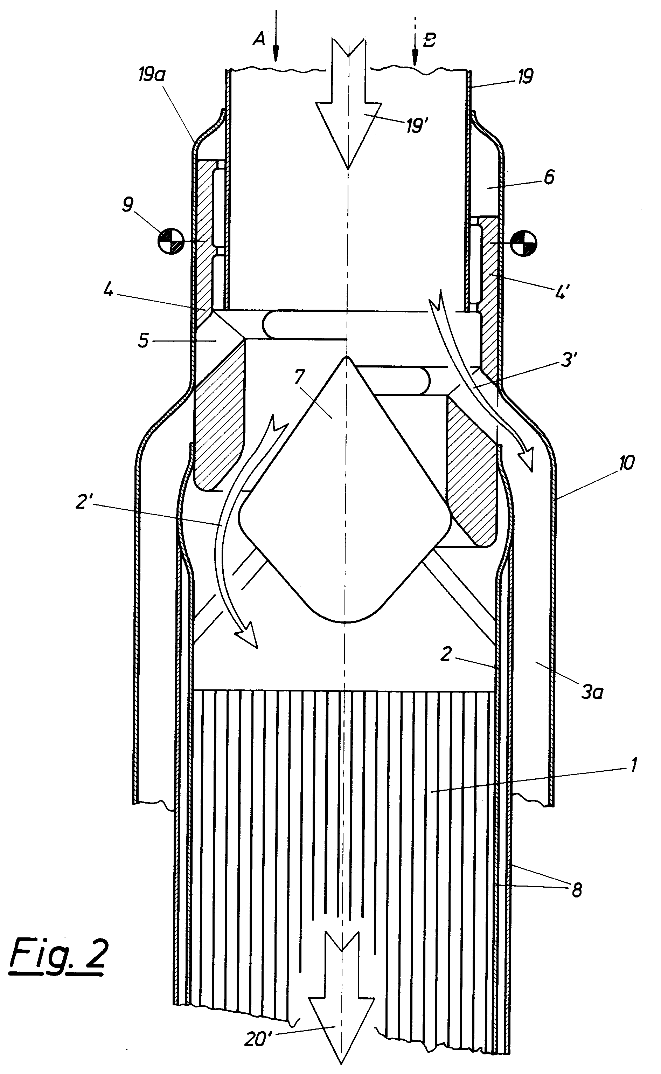

Fig. 2 zeigt ein Ausführungsbeispiel der Erfindung, bei dem der den Startkatalysator 1 umgehende Strömungsweg 3' als Ringraum 3a gestaltet ist, der vom Innenrohr 2 und einem zu diesen konzentrischen Mantelrohr 10 gebildet wird. Dabei ist das Innenrohr 2 mit Doppelwänden 8 ausgeführt, um einen besseren Schutz und eine thermische Isolierung des Startkatalysators zu erreichen.

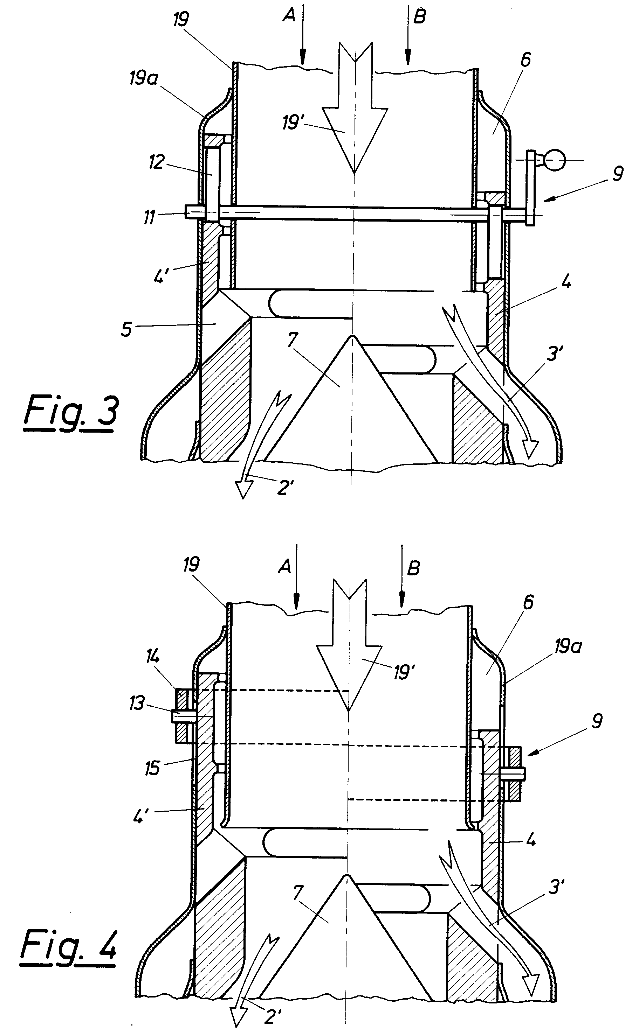

Fig. 3 zeigt eine Ausführungsform eines Betätigungsorganes 9, welches aus zwei auf einer Welle 11 sitzenden Exzentern 12 besteht, welche am Betätigungsteil 4' der Abgasverschiebemuffe 4 angreifen. Durch Drehung der Welle 11 und der Exzenter 12 um 180 ° wird die Abgasverschiebemuffe 4 von der Kaltlaufstellung A in die Warmlaufstellung B verschoben.

Fig. 4 zeigt eine Ausführungsform einer Betätigungseinrichtung 9, bei der am Betätigungsteil 4' befestigte Bolzen 13, welche die Gehäusewand 19a durch Öffnungen 15 durchdringen, mit einem Ringschieber 14 axial bewegt werden und dadurch den Stellungswechsel der Abgasverschiebemuffe 4 bewirken. Die Betätigungseinrichtung 9 selbst kann beispielsweise über eine Unter- oder Überdruckdose elektronisch kennfeldgeregelt sein, oder lediglich temperaturabhängig betätigt werden.

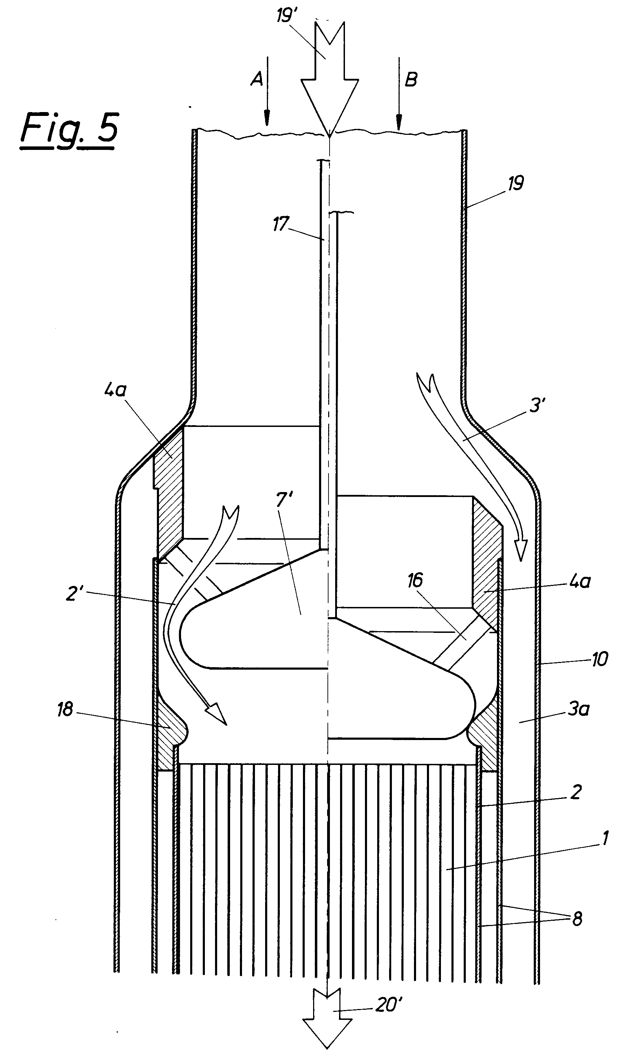

Im Ausführungsbeispiel nach Fig. 5 ist die Abgasverschiebemuffe 4a über Stege 16 mit dem Strömungsteiler 7' starr verbunden. Die axiale Verschiebung der Abgasverschiebemuffe wird durch eine am Strömungsteiler 7' angreifende Regelstange 17 bewirkt. In der Kaltlaufstellung A wird der den Startkatalysator 1 umgehende Strömungsweg 3a von der Abgasverschiebemuffe 4a verschlossen, wobei der Strömungsweg 2' durch den Startkatalysator 1 frei ist. In der Warmlaufstellung B liegt der Strömungsteiler 7' am Sitz 18 auf und versperrt damit den Strömungsweg 2' durch den Startkatalysator 1, während die Abgasverschiebemuffe 4a den umgehenden Strömungsweg 3' durch den Ringraum 3a freigibt.

Der erfindungsgemäße umgehbare Startkatalysator kann problemlos auch nachträglich eingebaut werden. Sein geringes Zusatzgewicht und seine kostengünstige zylindrische Katalysatorform erlaubt einen effektiven ökonomischen Einsatz.

## Patentansprüche

1. Brennkraftmaschine mit einem umgehbaren Startkatalysator, mit einem Steuerorgan zum Umschalten der Strömung in einer Abgasleitung (19) zwischen einer den Startkaltalysator (1) aktivierenden Kaltlaufstellung und einer den Startkatalysator (1) umgehenden Warmlaufstellung, und zumindest einem den Startkatalysator (1) umgehenden Strömungsweg (3'), wobei das Steuerorgan als eine außerhalb einer Gehäusewand (4') betätigbare, ringförmige und mit der Abgasleitung (19) achsgleiche und längs dieser verschiebbare Abgasverschiebemuffe (4, 4a) ausgebildet ist, und die Abgasverschiebemuffe (4) Durchtritte (5) aufweist, die in der Warmlaufstellung (B) den den Startkatalysator (1) umgehenden Strömungsweg (3') freigeben, **dadurch gekennzeichnet,** daß stromabwärts der Abgasverschiebemuffe (4) ein mit der Abgasleitung (19) achsgleicher Strömungsteiler (7) angeordnet ist, und daß der Startkatalysator (1) in Form eines Zylinders ausgebildet ist und der umgehende Strömungsweg (3') außen am Startkatalysator (1) vorbeiführt.

2. Brennkraftmaschine nach Anspruch 1, **dadurch gekennzeichnet** , daß der den Startkatalysator (1) umgehende Strömungsweg (3') als Ringraum (3a) zwischen zwei achsgleichen konzentrischen Rohren gebildet wird, wobei der Startkatalysator (1) vom Innenrohr (2) aufgenommen wird.

3. Brennkraftmaschine nach Anspruch 2, **dadurch gekennzeichnet** , daß das Innenrohr (2) als Doppelmantelrohr (8) ausgeführt ist.

4. Brennkraftmaschine nach einem der Ansprüche 1 bis 3, **dadurch gekennzeichnet**, daß ein durch die Abgasleitung (19) und die Gehäusewand (19a) gebildeter Ringraum (6) vorgesehen ist, in welchem ein Betätigungsteil (4') der Abgasverschiebemuffe (4) während der Kaltlaufphase des Motors in die Kaltlaufstellung (A) einschiebbar ist.

5. Brennkraftmaschine nach einem der Ansprüche 1 bis 4, **dadurch gekennzeichnet**, daß zur Betätigung der Abgasverschiebemuffe (4) zumindest ein durch eine die Gehäusewand (19a) durchsetzende Welle (11) drehbarer Exzenter (12) vorgesehen ist, welcher an der Abgasverschiebemuffe (4) angreift.

6. Brennkraftmaschine nach einem der Ansprüche 1 bis 4, **dadurch gekennzeichnet**, daß die Abgasverschiebemuffe (4) mit zumindest einem die Gehäusewand (19a) durchsetzenden Bolzen (13) starr verbunden ist, durch welche(n) vorzugsweise über einen Stellring (14) die Abgasverschiebemuffe (4) betätigbar sind (ist), wobei im Bereich der (des) Bolzen(s) in der Gehäusewand (19a) je eine in Verschieberichtung langgestreckte Öffnung (15) vorgesehen ist.

7. Brennkraftmaschine nach Anspruch 1 oder 2, **dadurch gekennzeichnet** , daß die Abgasverschiebemuffe (4a) und der Strömungsteiler (7') über Stege (16) miteinander verbunden sind, und die Abgasverschiebemuffe (4a) über eine am Strömungsteiler (7') mittig angreifende Regelstange (17) betätigbar ist.

8. Brennkraftmaschine nach einem der Ansprüche 1 bis 7, **dadurch gekennzeichnet**, daß der Strömungsteiler (7, 7') und/oder der Startkatalysator elektrisch beheizbar ist.

## Claims

1. Internal combustion engine comprising a supplementary catalytic converter for start-up, and a control device for diverting the flow of exhaust gases in an exhaust pipe (19) from a starting position in which the start-up converter (1) is activated to a normal operating position in which the start-up converter (1) is by-passed, and further comprising at least one flow path (3') by-passing the start-up converter (1), the control device being configured as an annular sliding tube (4, 4a) which is actuated from outside the wall (19a') of a housing, its axis being identical with that of the exhaust pipe (19) along which it can be moved, and which sliding tube (4) is provided with apertures (5) opening the flow path (3') by-passing the start-up converter (1) in the normal operating position (B), **characterized** **in that** downstream of the sliding tube (4) a flow divider (7) is arranged whose axis is identical with that of the exhaust pipe (19), and that the start-up converter (1) is cylindrical in shape, and that the by-passing flow path (3') leads along the start-up converter (1) on its outside.

2. Internal combustion engine as in claim 1, characterized in that the flow path (3') by-passing the start-up converter (1) is defined as annular passage (3a) between two concentric pipes with the same axis, the start-up converter (1) being provided in the inner pipe (2),

3. Internal combustion engine as in claim 2, **characterized in** **that** the inner pipe (2) is configured as a dual-jacket pipe (8).

4. Internal combustion engine as in any of claims 1 to 3, **characterized in that** an annular passage (6) is provided, which is defined by the exhaust pipe (19) and the wall (19a) of the housing, and which accommodates an actuating part (4') of the sliding tube (4) in the start-up position (A) during the start-up period of the engine.

5. Internal combustion engine as in any of claims 1 to 4, **characterized in that** at least one eccentric (12) is provided for actuation of the sliding tube (4), which eccentric (12) is rotatable by means of a shaft (11) passing through the wall (19a) of the housing, and which acts on the sliding tube (4).

6. Internal combustion engine as in any of claims 1 to 4, **characterized in that** the sliding tube (4) is rigidly connected to at least one pin (13) passing through the wall (19a) of the housing, by means of which the sliding tube (4) can be actuated, preferably via an adjusting collar (14), a long opening (15) extending in sliding direction being provided for each pin (13) in the wall (19a) of the housing.

7. Internal combustion engine as in claim 1 or 2, **characterized in that** the sliding tube (4a) and the flow divider (7') are connected with each other by means of ribs (16), and that the sliding tube (4a) is actuated by a control rod (17) centrally acting on the flow divider (7').

8. Internal combustion engine as in any of claims 1 to 7, **characterized in that** the flow divider (7, 7') and/or the start-up converter (1) are electrically heatable.

## Revendications

1. Moteur à combustion interne comportant un catalyseur de démarrage contournable, comprenant un organe de commande pour commuter l'écoulement dans une conduite de gaz d'échappement (19) entre une position de fonctionnement àfroid activant le catalyseur à froid (1) et une position de fonctionnement à chaud contournant le catalyseur de démarrage (1), et au moins un chemin d'écoulement (3') contournant le catalyseur (1), l'organe de commande étant en forme de manchon coulissant pour gaz d'échappement (4, 4a) actionné à l'extérieur de la paroi (4') du boîtier, annulaire et coaxial à la conduite d'échappement (19) et coulissant le long de celle-ci, et le manchon (4) comporte des passages (5) qui libèrent le chemin d'écoulement (3') contournant le catalyseur de démarrage (1) en position de fonctionnement à chaud (B), caractérisé en ce qu'en aval du manchon coulissant de gaz d'échappement (4), il est prévu un diviseur d'écoulement (7) coaxial à la conduite des gaz d'échappement (19), le catalyseur de démarrage (1) étant en forme de cylindre et le chemin d'écoulement (3') contournant extérieurement le catalyseur de démarrage (1).

2. Moteur à combustion interne selon la revendication 1, caractérisé en ce que le chemin d'écoulement (3') contournant le catalyseur de démarrage (1) est réalisé en forme de volume annulaire (3a) entre deux tubes concentriques coaxiaux, le catalyseur de démarrage (1) étant logé dans le tube intérieur (2).

3. Moteur à combustion interne selon la revendication 2, caractérisé en ce que le tube intérieur (2) est un tube à double enveloppe (8).

4. Moteur à combustion interne selon l'une des revendications 1 à 3, caractérisé par un volume annulaire (6) formé par la conduite de gaz d'échappement (19) et la paroi de boîtier (19a), volume dans lequel peut coulisser une pièce de manoeuvre (4') du manchon coulissant de gaz d'échappement (4) pendant la phase de fonctionnement à froid du moteur, en position de fonctionnement à froid (A).

5. Moteur à combustion interne selon l'une des revendications 1 à 4, caractérisé en ce que pour actionner le manchon coulissant à gaz d'échappement (4), au moins un axe (11) traversant la paroi (19a) du boîtier, comporte un excentrique (12) agissant sur le manchon coulissant (4).

6. Moteur à combustion interne selon l'une des revendications 1 à 4, caractérisé en ce que le manchon coulissant à gaz d'échappement (4) est relié rigidement à au moins un goujon (13) traversant la paroi de boîtier (19a), et ce ou ces manchon(s) actionnent de préférence par une bague de réglage (14), le manchon coulissant (4), et au niveau du ou des manchons, la paroi (19a) du boîtier comporte chaque fois une ouverture (15), allongée dans la direction de coulissement.

7. Moteur à combustion interne selon la revendication 1 ou 2, caractérisé en ce que le manchon coulissant (4a) des gaz d'échappement et le diviseur d'écoulement (7') sont reliés par des entretoises (16) et le manchon coulissant (4a) est actionné par une tige de réglage (17) agissant au milieu sur le diviseur d'écoulement (7').

8. Moteur à combustion interne selon l'une des revendications 1 à 7, caractérisé en ce que le diviseur d'écoulement (7, 7') et/ou le catalyseur de démarrage sont chauffés électriquement.
